Europäisches Patentamt

European Patent Office

Office européen des brevets

(11) Veröffentlichungsnummer: **0 304 572**
**A2**

(12) # EUROPÄISCHE PATENTANMELDUNG

(21) Anmeldenummer: 88109587.1

(22) Anmeldetag: 16.06.88

(51) Int. Cl.⁴: **B29C 65/02 , //B29L23/22**

(30) Priorität: 28.08.87 CH 3325/87

(43) Veröffentlichungstag der Anmeldung:
01.03.89 Patentblatt 89/09

(84) Benannte Vertragsstaaten:
AT BE CH DE ES FR GB GR IT LI LU NL SE

(71) Anmelder: GEORG FISCHER
AKTIENGESELLSCHAFT
Mühlentalstrasse 105
CH-8201 Schaffhausen(CH)

(72) Erfinder: Kunz, Peter
Breitenaustrasse 156
CH-8200 Schaffhausen(CH)

(54) Einrichtung zum Abstützen rohrförmiger thermoplastischer Teile beim Schweissen.

(57) Zur inneren Abstützung beim Verschweissen zweier rohrförmiger Teile (1a, 1b) mittels einer am Aussenumfang angeordneten aufheizbaren Schweissvorrichtung (2) wird innen an der Schweissstelle ein zerstörbarer, wärmebeständiger Ring (3) angeordnet. Dieser Ring (3) besteht entweder aus einem spröden, durch einen Schlag von aussen zerstörbarem Material wie z.B. Glas oder Keramik oder aus einem wasserlöslichem Material wie z.B. Salz oder Harnstoff, welcher bei Durchspülung der Rohrleitung mit Wasser aufgelöst und somit entfernt wird.

Fig 1

EP 0 304 572 A2

# Einrichtung zum Abstützen rohrförmiger thermoplastischer Teile beim Schweissen

Die Erfindung betrifft eine Einrichtung zum Abstützen rohrförmiger thermoplastischer Teile beim Schweissen.

Beim direkten Verschweissen von thermoplastischen Rohren bzw. rohrförmigen Teilen durch Erhitzung der zusammenstossenden Rohrenden an deren Aussenumfang mittels einer Heizvorrichtung, entsteht im Innenumfang dieser Teile eine Schweisswulst, welche den Durchflussquerschnitt verringert und den Strömungswiderstand erhöht. Durch die Möglichkeit des Abfliessens der Schmelze in den Innenraum kann sich auch kein genügender Schweissdruck aufbauen, so dass die Schweissverbindungen nicht immer den Erfordernissen auf Festigkeit und Dichtheit entsprechen.

Bekannt ist eine Abstützeinrichtung der eingangs genannten Art (DE-GBM-68213275.2), welche aber nur für gerade, sich nur unwesentlich verengende Rohrteile verwendbar ist, da die als mechanisch aufweitbare Manschetten ausgebildete Einrichtung nur aus derartigen Rohrteilen nach dem Schweissen wieder entfernbar ist.

Aufgabe der vorliegenden Erfindung ist die Schaffung einer Einrichtung der Eingangs genannten Art, mittels welcher für eine Abstützung im Schweissbereich von rohrförmigen Teilen bzw. Rohrleitungen zur Vermeidung von inneren Schweisswülsten und zur Bildung eines Schweissdruckes ausgebildet ist, wobei die Einrichtung nach dem Schweissen aus mit Ecken und Verengungen versehenen Rohrteilen bzw. Rohrleitungen entfernbar sein soll.

Erfindungsgemäss wird dies durch die kennzeichnenden Merkmale von Anspruch 1 gelöst.

Besonders vorteilhafte Ausgestaltungen der Erfindung sind in den abhängigen Ansprüchen gekennzeichnet.

Die Erfindung ist anhand von Ausführungsbeispielen in den beiliegenden Zeichnungen vereinfacht dargestellt und nachfolgend beschrieben. Es zeigen:

Fig. 1 Einen in die rohrförmigen Teile eingesetzten, zerstörbaren Ring vor dem Schweissvorgang und

Fig. 2 den eingesetzten Ring mit den rohrförmigen Teilen nach dem Schweissen.

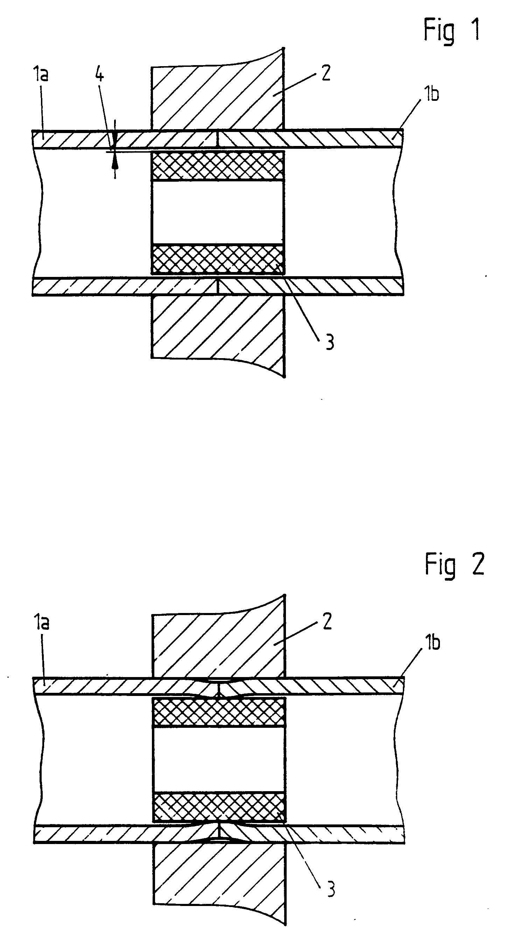

Die Fig. 1 zeigt zwei zu verbindende, rohrförmige Teile 1a, 1b, welche stirnseitig zusammenstossend durch mit einer am Aussenumfang angeordneten Schweissvorrichtung 2 verschweisst werden.

Im Inneren der rohrförmigen Teile 1a, 1b ist im Bereich der Schweissung ein zerstörbarer Ring 3 angeordnet, welcher vor dem Zusammenstossen der beiden rohrförmigen Teile 1a, 1b eingeführt wird. Der Ring 3 weist zum Innenumfang der rohrförmigen Teile 1a, 1b ein Spiel 4 auf. Der massive zer störbare Ring 3 sollte aus einem wärmebeständigen, jedoch möglichst schlecht wärmeleitendem Material hergestellt sein.

Durch die Erhitzung der rohrförmigen Teile 1a, 1b während dem Schweissvorgang verringert sich an deren zusammenstossenden Enden der Durchmesser und legen sich mit dem Innenumfang gemäss Fig. 2 an den Ring 3 an. Dieses Einschrumpfen der Rohrenden erfolgt wegen vorhandenen inneren Spannungen in den rohrförmigen Teilen.

Die, die rohrförmigen Teile 1a, 1b eng umfassende Schweissvorrichtung 2 bringt das thermoplastische Material zum Schmelzen, wobei eine Wärmeausdehnung des Materials erfolgt.

Durch die innere Abstützung mittels des Ringes 3 und die äussere Umfassung der Schweissvorrichtung 2 entsteht der erforderliche Schweissdruck, wobei auch insbesondere am Innenumfang nachteilige Schweisswülste vermieden werden.

Nach erfolgter Schweissung wird die Schweissvorrichtung entfernt und der im Inneren der rohrförmigen Teile 1a, 1b fest anliegende Ring 3 durch Zerstörung entfernt.

Dies kann, je nachdem aus welchem Material der Ring 3 besteht, auf zwei verschiedene Möglichkeiten erfolgen.

Bei der ersten Variante besteht der Ring 3 aus einem spröden Material, welches durch Schlag, bzw. Schläge auf den Aussenumfang des Rohres in kleine Teile zerspringt. Diese Teile können dann aus dem Rohr herausgespült oder abgesaugt werden.

Beispielsweise besteht hierbei der Ring 3 aus einem eine Vorspannung aufweisenden wärmebeständigen amorphen Werkstoff wie z.B. aus einem Glasrohr.

Weiterhin kann der Ring 3 aus einem wärmebeständigen, gesinterten und spröden Werkstoff wie z.B. Keramik bestehen.

Auch ist die Verwendung von wärmebeständigem gepresstem, sprödem Werkstoff möglich, wobei der Ring aus nichtgesintertem Teflon oder aus einem anderen zusammengepressten Stoff bestehen kann, welcher bei Schlag in kleine Teile zerfällt.

Bei der zweiten Variante besteht der Ring 3 aus einem wasserlöslichen und wärmebeständigen Stoff und ist vorzugsweise als Pressteil hergestellt. Bei Durchspülung der Rohrleitung mittels Wasser löst sich der Ring dabei auf und kann somit problemlos aus jeder beliebige Formen und Abmessungen aufweisenden Rohrleitung entfernt werden.

Bei dieser Variante kann der Ring 3 vorteilhafterweise aus anorganischen oder organischen Salzen,
Salz-Mischungen z.B. NaNO3/NaNO2,
Harnstoff bzw. ein Harnstoff-Compound,
Poly-Vinyl-Alkohol bzw. ein Poly-Vinyl-Alkohol-Compound Zucker
hergestellt sein.

Als besonders vorteilhaft haben sich ein Gemisch aus Harnstoff und Polyvinyl-Alkohol herausgestellt.

## Ansprüche

1. Einrichtung zum Abstützen rohrförmiger thermoplastischer Teile beim Schweissen, dadurch gekennzeichnet, dass ein den Innenumfang der rohrförmigen Teile im Bereich der Schweissverbindung abstützender Ring (3) angeordnet ist, welcher nach dem Schweissvorgang zerstörbar ist.

2. Einrichtung nach Anspruch 1, dadurch gekennzeichnet, dass der Ring (3) aus einem leicht durch Schlageinwirkung von Aussen zerstörbarem, sprödem und wärmebeständigem Material besteht.

3. Einrichtung nach Anspruch 2, dadurch gekennzeichnet, dass der Ring (3) aus einem, eine Vorspannung aufweisenden wärmebeständigen, amorphen Werkstoff besteht

4. Einrichtung nach Anspruch 2, dadurch gekennzeichnet, dass der Ring (3) aus einem wärmebeständigen, gesintertem und sprödem Werkstoff besteht.

5. Einrichtung nach Anspruch 2, dadurch gekennzeichnet, dass der Ring (3) aus einem wärmebeständigem, gepresstem, sprödem Werkstoff besteht.

6. Einrichtung nach Anspruch 1, dadurch gekennzeichnet, dass der Ring (3) aus einem wasserlöslichen und wärmebeständigen Stoff besteht.

7. Einrichtung nach Anspruch 6, dadurch gekennzeichnet, dass der Ring (3) aus einem organischen oder anorganischen Salz hergestellt ist.

8. Einrichtung nach Anspruch 6, dadurch gekennzeichnet, dass der Ring (3) aus Harnstoff oder einem Harnstoff-Compound hergestellt ist.

9. Einrichtung nach Anspruch 6, dadurch gekennzeichnet, dass der Ring (3) aus Polyvinyl-Alkohol oder einem Polyvinyl-Alkohol-Compound hergestellt ist.

10. Einrichtung nach Anspruch 6, dadurch gekennzeichnet, dass der Ring (3) aus Zucker hergestellt ist.

11. Einrichtung nach Anspruch 3, dadurch gekennzeichnet, dass der Ring (3) aus einem Glasrohr besteht.

12. Einrichtung nach Anspruch 4, dadurch gekennzeichnet, dass der Ring (3) aus Keramik besteht.

13. Einrichtung nach Anspruch 5, dadurch gekennzeichnet, dass der Ring (3) aus nicht gesintertem Teflon besteht.

Fig 1

Fig 2